# EUROPEAN PATENT APPLICATION

(11) **EP 4 838 734 A1**
(43) Date of publication of application: **11.11.2026**
(21) Application number: 25218231.6
(22) Date of filing: 25.11.2025
(51) Int. Cl.: H02J 1/14, G06F 1/26, H02J 7/42, H02J 7/47, H02J 7/60, H02J 7/96

(54) **SINK DEVICE AND SELF-ADAPTATION METHODS FOR SINK DEVICE AND ELECTRONIC DEVICE**

(30) Priority: 07.05.2025 CN 202510581136
(71) Applicant: Getac Technology Corporation, New Taipei City 221009 (TW)
(72) Inventor: YU, Wen-Huan, 11568 Taipei City (TW)
(74) Representative: Viering, Jentschura & Partner mbB Patent- und Rechtsanwälte

(57) **Abstract**

A self-adaptation method for a sink device includes the following steps. Obtain source capabilities of a source device. Request a maximum power from the source device according to the source capabilities. Receive a message indicating that the source device accepts the request, and receive a limited maximum power delivered by the source device. Detect and track a slope of a DC voltage when the source device delivers the limited maximum power. When the source device delivers limited maximum power, and if the slope of the DC voltage changes, a load is adjusted until the slope of the DC voltage corresponds to a zero slope. Estimate the limited maximum power delivered by the source device to update the source capabilities of the source device.

## Description

### BACKGROUND

### Field of Invention

The present invention relates to a sink device and self-adaptation methods for the sink device and an electronic device. More particularly, the present invention relates to a sink device and self-adaptation methods for the sink device and an electronic device, which are capable of adapting power sources.

### Description of Related Art

Nowadays, power adapters are designed in various specifications to output different levels for charging various products. However, if there is a discrepancy between a power supplied by a power adapter and a power data obtained from an electronic device or a rated power of the electronic device, the power adapter may keep constantly disconnecting and connecting while charging. Therefore, how to provide a sink device and self-adaptation methods for the sink device and an electronic device are important issues in this field.

### SUMMARY

The present disclosure provides a self-adaption method for a sink device. The self-adaption method includes the following steps. Obtaining source capabilities of a source device. Request a maximum power from the source device according to the source capabilities. Receive a message indicating that the source device accepts the request, and receive a limited maximum power delivered by the source device. Detect and track a slope of a direct current (DC) voltage, when the source device delivers the limited maximum power. When the source device delivers the limited maximum power, and when the slope of the DC voltage changes, a load is adjusted until the slope of the DC voltage corresponds to a zero slope to yield an adjusted load. Estimate the limited maximum power delivered by the source device according to the adjusted load, to update the source capabilities to yield updated source capabilities.

The present disclosure provides a sink device. The sink device includes a connector, a voltage detection circuit and a control circuit. The connector is configured to be coupled to a source device. The voltage detection circuit is electrically connected to the connector. The control circuit is electrically connected to the connector and the voltage detection circuit, and the control circuit is configured to perform the following steps. Obtain source capabilities of the source device. Request a maximum power from the source device to according to the source capabilities. Receive a message indicating that the source device accepts the request, and receive a limited maximum power delivered by the source device. Detect and track a slope of a direct current (DC) voltage, when the source device delivers the limited maximum power. When the source device delivers the limited maximum power, and when the slope of the DC voltage changes, a load is adjusted, until the slope of the DC voltage corresponds to a zero slope to yield an adjusted load. Estimate the limited maximum power delivered by the source device according to the adjusted load, to update the source capabilities to yield updated source capabilities.

The present disclosure provides a self-adaption method for an electronic device. The self-adaption method includes the following steps. Receive a limited maximum power delivered by an external power supply. Detect and track a slope of a direct current (DC) voltage, when the external power supply delivers the limited maximum power. When the external power supply delivers the limited maximum power, and when the slope of the DC voltage changes, a load is adjusted, until the slope of the DC voltage corresponds to a zero slope to yield an adjusted load. Estimate the limited maximum power delivered by the external power supply according to the adjusted load, to update output power information.

Summary, the sink device and the self-adaptation methods for the sink device and the electronic device are capable of stable charging in situations that there is a discrepancy between a power supplied by the power adapter and power data obtained by or a rated power of an electronic device.

### BRIEF DESCRIPTION OF THE DRAWINGS

The present disclosure can be more fully understood by reading the following detailed description of the embodiment, with reference made to the accompanying drawings as follows.
Fig. 1 depicts a schematic diagram of a charging system according to some embodiments of the present disclosure.
Fig. 2 depicts a flow chart of an operation method for the charging system according to some embodiments of the present disclosure.
Fig. 3 depicts a schematic diagram of a load of an electronic device according to some embodiments of the present disclosure.
Fig. 4 depicts a schematic diagram of a charging system according to some embodiments of the present disclosure.
Fig. 5 depicts a flow chart of an operation method for the charging system according to some embodiments of the present disclosure.

### DETAILED DESCRIPTION

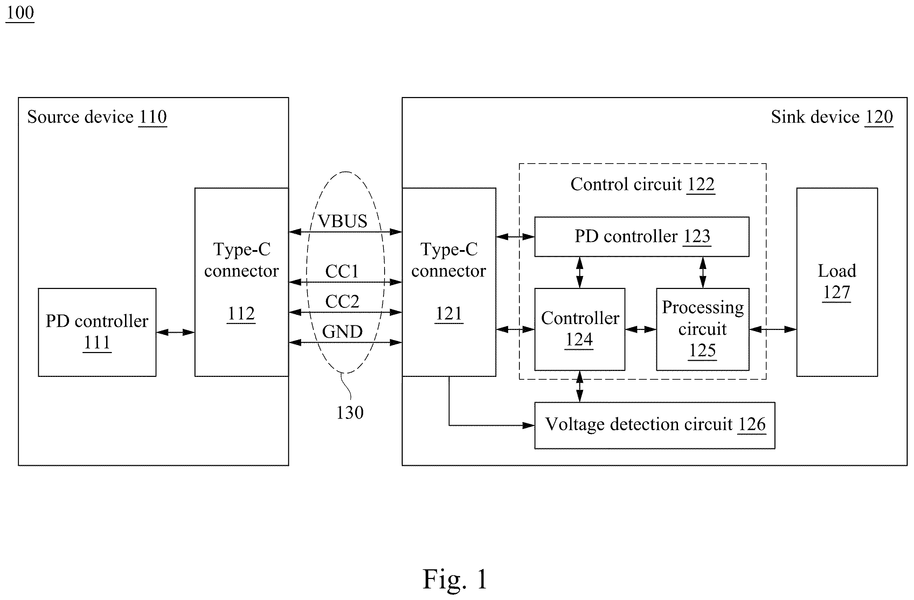

A sink device can request a charger which supports power delivery to supply a corresponding power by data transmission and communication. In some cases, because of limitations of protection mechanisms, actual source capabilities of the charger are not meet the data provided by the charger, which causes that the charger may keep on constantly disconnecting and connecting while charging. For example, a charger provides data including a power level of 5V/3A, an output of the charger is limited to 5V/1A due to the protection mechanisms in actual use. Therefore, the present disclosure provides a charging system and method to solve the above problems. A description is provided with reference to Fig. 1. Fig. 1 depicts a schematic diagram of a charging system 100 according to some embodiments of the present disclosure. As shown in Fig. 1, the charging system 100 includes a source device 110 and a sink device 120. In some embodiments, the source device 110 is a charger that supports power deliver (PD) protocol. In some embodiments, the source device 110 includes a PD controller 111 and a Universal Serial Bus (USB) Type-C connector 112.

In some embodiments, the sink device 120 is an electronic device which supports a power delivery protocol (e.g. PD protocol), where the electronic device can be, for example, a mobile device (e.g., a mobile phone, laptop, panel, tablet, etc.) or other electronic device. In some embodiments, based on the power delivery protocol, the sink device 120 can communicate with the source device 110 to obtain source capabilities of the source device 110. In some embodiments, the sink device 120 includes a USB Type-C connector 121, a control circuit 122, a voltage detection circuit 126 and a load 127.

In some embodiments, the voltage detection circuit 126 is electrically connected to a VBUS pin of the USB Type-C connector 121 to detect a supply voltage, provided by source device 110, from the USB Type-C connector 121.

In some embodiments, the control circuit 122 includes a PD controller 123, a controller 124 and the processing circuit 125. In some embodiments, the PD controller 123 of the sink device 120 communicates with the PD controller 111 of the source device 110 based on the PD protocol to obtain the source capabilities of the source device 110, and the source device 110 request a required power level according to the source capabilities of the source device 110.

In some embodiments, the controller 124 can be a microcontroller or other control circuit. The controller 124 is electrically connected to the voltage detection circuit 126, the PD controller 123 and the processing circuit 125. In some embodiments, the controller 124 is configured to indicate the processing circuit 125 to adjust the load 127 according to the output of the voltage detection circuit 126, until the supply voltage is stable.

In some embodiments, the processing circuit 125 includes one or more processor and one or more memory electrically connected to the processor(s), and the processor(s) is configured to access instructions and data stored in the memory(s). In some embodiments, the said processor includes a central processing unit, graphics processing unit, tensor processing unit, application specific integrated circuit and/or any equivalent processing circuit. In some embodiments, the said memory includes a dynamic memory, static memory, hard disk, flash memory and/or any equivalent memory device. In some embodiments, the processing circuit 125 adjusts the load 127 according to the instruction from the controller 124. In some embodiments, the said load 127 can be a work load of the sink device, the brightness of the display of the sink device, etc.

In some embodiments, the cable 130 connects the source device 110 to the sink device 120. In some embodiments, the cable 130 is a USB Type-C cable. In some embodiments, the cable 130 includes a VBUS wire, CC1 wire, CC2 wire and GND wire, where the VBUS wire is configured to transmit a supply voltage, and the CC1 wire and the CC2 wire are configured to transmit the signals for channel configuration. In some embodiments, the PD controller 111 of the source device 110 communicates with the PD controller 123 of the sink device 120 through the CC1 wire and the CC2 wire, in order to provide the corresponding supply voltage according to the requirements of the sink device 120.

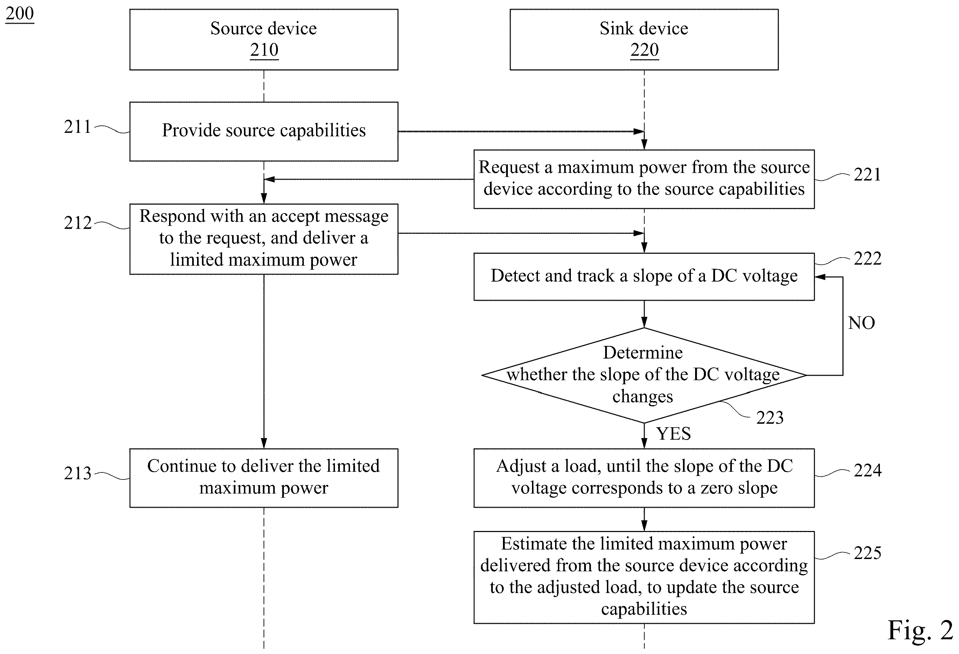

A description is provided with reference to Fig. 2. Fig. 2 depicts a flow chart of an operation method 200 for the charging system according to some embodiments of the present disclosure. In some embodiments, the operation method 200 includes steps 211-213 and 221-225. In some embodiments, the charging system includes a source device 210 and a sink device 220. In some embodiments, the source device 210 and the sink device 220 are respectively correspond to the source device 110 and the sink device 120 in Fig. 1. In some embodiments, steps 211-213 can be performed by the source device 210. In some embodiments, steps 221-225 can be considered as a self-adaption method for the sink device 220. In some embodiments, steps 221-225 can be performed by the control circuit of the sink device 220. In some embodiments, the sink device 220 includes a control circuit, a voltage detection circuit and a load. The control circuit includes a PD controller, a controller and a processing circuit. In some embodiments, the PD controller, the controller, the processing circuit, the voltage detection circuit and the load of the sink device 220 are respectively correspond to the PD controller 123, the controller 124, the processing circuit 125, the voltage detection circuit 126 and the load 127 of the sink device 120 in Fig. 1. In some embodiments, step 221 can be performed by the PD controller of the sink device 220. Step 222 can be performed by the supply voltage detection circuit of the sink device 220. Step 223 can be performed by the controller of the sink device 220. In some embodiments, steps 224-225 can be performed by the processing circuit of the sink device 220. n some embodiments, the controller of the sink device 220 can indicates the processing circuit to perform step 224, and step 224 can be performed by the controller of the sink device 220. In other embodiments, steps 221-225 can be performed by the components with corresponding functions, which is not intended to limit the present disclosure.

The source device 210 performs step 211 to provide information of source capabilities. In some embodiments, the source capabilities of the source device 210 include one or more voltage level (e.g., 5 volts, etc.), and each voltage level corresponds to a power range.

The sink device 220 performs step 221 to request a maximum power from the source device according to the source capabilities. In some embodiments, the sink device 220 selects a maximum power with a required voltage level from the source capabilities provided by the source device 210, and sends a request to the source device 210. In some embodiments, the sink device 220 configures the load according to the maximum power.

The source device 210 performs step 212 to respond with an accept message to the request, and deliver a limited maximum power. In some embodiments, an actual maximum power delivered by the source device 210 may be limited by the protection mechanism of the source device 210, and the maximum power of the source device 210 may be less than maximum power in the source capabilities of source device 210. In some embodiments, the said protection mechanism includes at least one of over power protection, over load protection and over current protection. In some embodiments, the limited maximum power provided by the source device 210 corresponds to a threshold of the protection mechanism of the source device 210. In some embodiments, the supply voltage, provided by the source device 210, corresponds to a voltage level requested by sink device 120, when an output current of the source device 210 is limited by the protection mechanism, a product of the output current of the source device 210 and the voltage level may not meet the maximum power in the power range under the voltage level.

The sink device 220 performs step 222 to detect and track a slope of a direct current (DC) voltage. In some embodiments, the sink device 220 detects and tracks the DC voltage (e.g. the supply voltage) provided by the source device 210 from USB Type-C connector.

The sink device 220 performs step 223 to determine whether the slope of the DC voltage changes. In some embodiments, since the sink device 220 configures the load according to the maximum power, when the actual maximum power of the source device 210 is less than the maximum power in the source capabilities provided by the source device 210, the supply voltage decreases. When the supply voltage decreases to trigger the under voltage protection mechanism of the source device 210, the source device 210 stops supplying power, causing that the source device 210 keeps on constantly disconnecting and connecting while charging. In some embodiments, if a difference between the limited maximum power and the maximum power is greater than a predetermined value, which means that a threshold for triggering the protection mechanism of the source device 210 is less than a maximum power in the source capabilities provided by the source device 210. In steps 223, if YES, the sink device 220 continues to perform step 224. If NO, the sink device 220 continues to perform step 222.

The source device 210 performs step 213 to continue to deliver the limited maximum power. When the sink device 220 performs steps 222-224, the source device 210 continues to deliver the limited maximum power.

The sink device 220 performs step 224 to adjust a load, until the slope of the DC voltage corresponds to a zero slope. In some embodiments, the processing circuit of the sink device 220 adjusts the load, until the DC voltage is stable in a predetermined period. In some embodiments, the load can be progressively decreased and/or increased according to multiple predetermined values (e.g., three or more than three values) in order, in order to approach the actual maximum load which can be supported by the source device 210. For example, the sink device 220 configures 90% of total load according to the maximum power requested in step 221, when the supply voltage decreases, the sink device 220 reduce the load by a first predetermined value (e.g. 45%). When the load is 45% of total load, if the supply voltage is stable (e.g., the slope of the supply voltage corresponds to a zero slope), the sink device 220 can increase the load by a second predetermined value (e.g. 20%). When the load is 65% of total load, if the supply voltage decreases, the sink device 220 can decrease the load by a third predetermined value (e.g. 10%). When the load is 55% of total load, if the supply voltage is stable, then 55% of total load can be considered as the adjusted load.

The sink device 220 performs step 225 to estimate the limited maximum power delivered from the source device according to the adjusted load, to update the source capabilities. In some embodiments, the actual current intensity provided by the source device 210 can be estimated according to the adjusted load (e.g. 55% of total load), thereby estimating the limited maximum power, provided by the source device, according to the DC voltage and the current, in order to update the information of the source capabilities. In some embodiments, the sink device 220 selects the required voltage and current from the information of the updated source capabilities according to the requirements, and requires the source device 210 to provide the required voltage and current. When the actual source capability of the source device 210, which is limited by the protection mechanism, is not meet the information provided by the source device, the sink device 220 can estimate the actual source capability of the source device 210 by adjusting the load, thereby updating the data provided by the source device 210, and thus the sink device 220 request the required power from the source device 210 according to the updated data. As a result, even in a situation that the actual output power of the source device 210 is less than the value in the data provided by the source device 210, the sink device 220 is capable of stable charging.

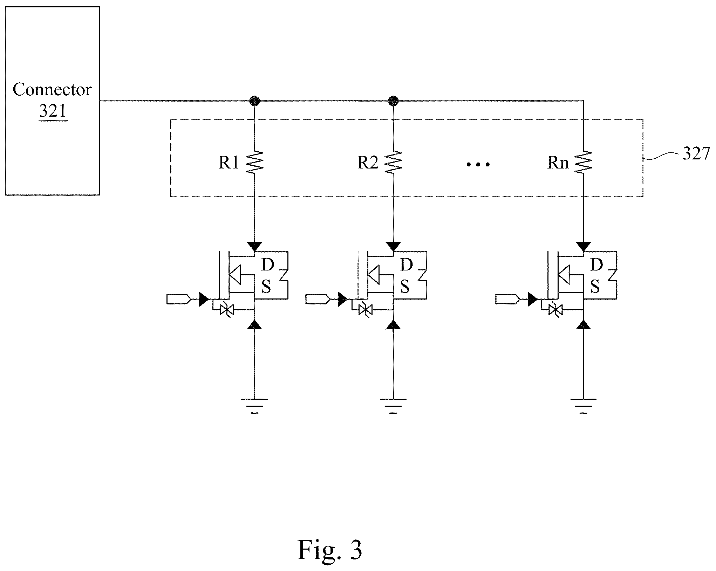

A description is provided with reference to Fig. 3. Fig. 3 depicts a schematic diagram of a load 327 of an electronic device according to some embodiments of the present disclosure. In some embodiments, the load 327 corresponds to the load 127 in Fig. 1. In some embodiments, the supply voltage transmitted through the connector 321 is configured to supply power to the load 327. The load 327 can be considered as multiple resistors in parallel R1~Rn, the load current can be changed by adjusting the total equivalent resistance. It should be noted that, the embodiments in Fig. 3 are for illustration, the adjustment of the load can be performed by the processing circuit of the electronic device, for instance.

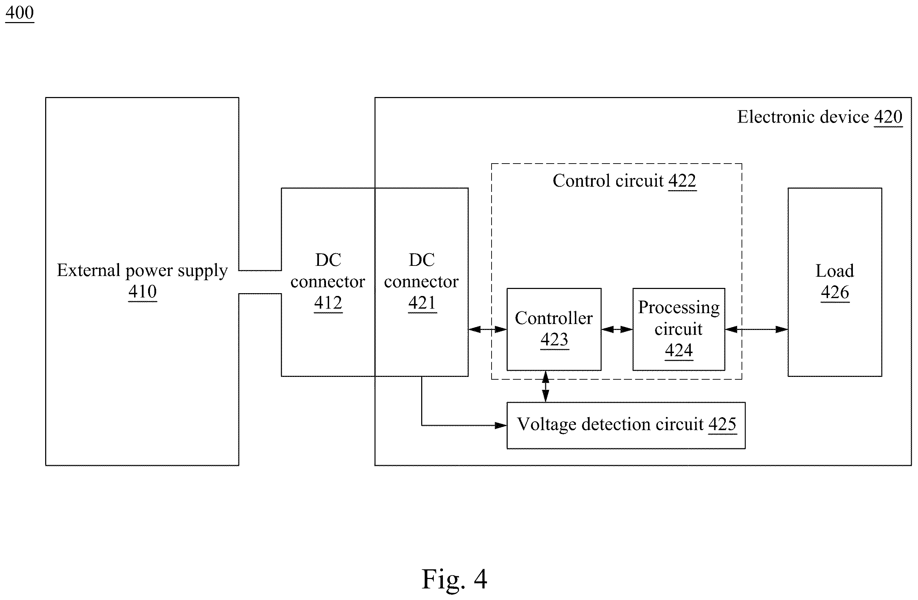

In some cases, the electronic device may receive a rated power from an external power supply through a corresponding connector. Moreover, due to the limitations of the protection mechanisms, the actual output power of the external power supply does not match the rated power, which causes the charger to constantly disconnect and connect while charging. For example, when the rated power of the electronic device is 60W, the output power is limited at 50W due to the protection mechanism of the external power supply when used. Therefore, the present disclosure provides a charging system and a method to solve the above problems. A description is provided with reference to Fig. 4. Fig. 4 depicts a schematic diagram of a charging system 400 according to some embodiments of the present disclosure. As shown in Fig. 4, the charging system 400 includes an external power supply 410 and an electronic device 420. In some embodiments, the external power supply 410 includes a male DC connector (e.g. a DC connector 412). In some embodiments, the electronic device 420 includes a female DC connector (e.g. a DC connector 421). In some embodiments, the electronic device 420 can be, for example, a mobile device (e.g., a mobile phone, laptop, panel, tablet, etc.) or other electronic device. In some embodiments, the electronic device 420 includes a DC connector 421, a control circuit 422, a voltage detection circuit 425 and a load 426.

In some embodiments, the voltage detection circuit 425 is electrically connected to the DC connector 421 to detect the supply voltage, provided by the external power supply 410, from the DC connector 421.

In some embodiments, the control circuit 422 includes a controller 423 and a processing circuit 424. In some embodiments, the controller 423 can be microcontroller or other control circuit. The controller 423 is electrically connected to the voltage detection circuit 425 and the processing circuit 424. In some embodiments, the controller 423 is configured to indicate the processing circuit 424 to adjust the load 426 according to the output of the voltage detection circuit 425, until the supply voltage is stable.

In some embodiments, the processing circuit 424 includes one or more processor and one or more memory electrically connected to the processor(s), and the processor(s) is configured to access instructions and data stored in the memory(s). In some embodiments, the said processor includes a central processing unit, graphics processing unit, tensor processing unit, application specific integrated circuit and/or any equivalent processing circuit. In some embodiments, the said memory includes a dynamic memory, static memory, hard disk, flash memory and/or any equivalent memory device. In some embodiments, the processing circuit 424 adjusts the load 426 according to the instruction from the controller 423. In some embodiments, the said load 426 can be a work load of the sink device, the brightness of the display of the sink device, etc.

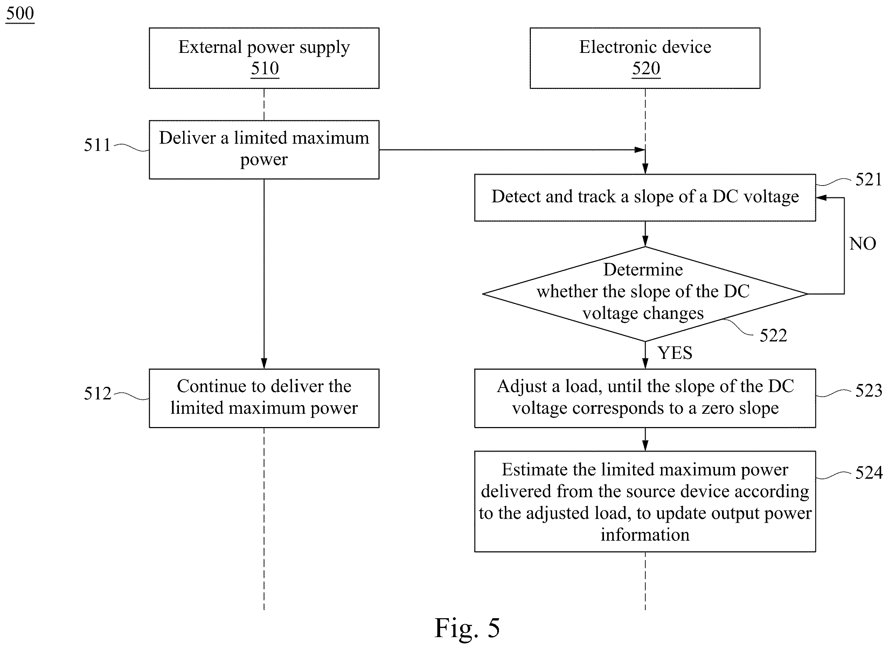

A description is provided with reference to Fig. 5. Fig. 5 depicts a flow chart of an operation method 500 for the charging system according to some embodiments of the present disclosure. In some embodiments, the operation method 500 includes steps 511-512 and 521-524. In some embodiments, the charging system includes the external power supply 510 and the electronic device 520. In some embodiments, the external power supply 510 and the electronic device 520 are respectively correspond to the external power supply 410 and the electronic device 420 in Fig. 4. In some embodiments, steps 511-512 can be performed by the external power supply 510. In some embodiments, steps 521-524 can be considered as a self-adaptation method for the electronic device 520. In some embodiments, steps 521-524 can be performed by the control circuit of the electronic device 520. In some embodiments, the electronic device 520 includes a control circuit, a voltage detection circuit and a load, and the control circuit includes a controller and a processing circuit. In some embodiments, the controller, the processing circuit, the voltage detection circuit and the load of the electronic device 520 are respectively correspond to the controller 423, the processing circuit 424, the voltage detection circuit 425 and the load 426 of the electronic device 420 in Fig. 4. In some embodiments, step 521 can be performed by the voltage detection circuit of the electronic device 520. Step 522 can be performed by the controller of the electronic device 520. In some embodiments, steps 523-524 can be performed by the processing circuit of the electronic device 520. In some embodiments, the controller can indicate the processing circuit to perform step 523, and step 224 can be performed by the controller of the electronic device 520. In the other embodiments, steps 521-524 can be performed by the components with the corresponding functions, which is not intended to limit the present disclosure.

The external power supply 510 performs step 511 to deliver a limited maximum power. In some embodiments, an actual output power delivered by the external power supply 510 may be limited by the protection mechanism of the external power supply 510, and the actual output power of the external power supply 510 may be less than rated power of the electronic device 520. In some embodiments, the said protection mechanism includes at least one of over power protection, over load protection and over current protection mechanism. In some embodiments, the limited maximum power provided by the external power supply 510 corresponds to a threshold of the protection mechanism of the external power supply 510. In some embodiments, the DC voltage provided by the external power supply 510 corresponds to the rated voltage of the electronic device 520, and when an output current of the external power supply 510 is limited by the protection mechanism, a product of the output current and the DC voltage of the external power supply 510 may not meet the rated power.

The electronic device 520 performs step 521 to detect and track a slope of a DC voltage. In some embodiments, the electronic device 520 detects and tracks the slope of the DC voltage (e.g. the supply voltage) provided by the external power supply 510 from the DC connector.

The external power supply 510 performs step 512 to continue delivering the limited maximum power. When the electronic device 520 performs steps 522-524, the external power supply 510 continues to deliver the limited maximum power.

The electronic device 520 performs step 522 to determine whether the slope of the DC voltage changes. In some embodiments, since the electronic device 520 configures the load according to the rated power, when the actual output power of the external power supply 510 is less than the rated power, the supply voltage decreases. When the supply voltage decreases to trigger the under voltage protection mechanism of the external power supply 510, the external power supply 510 stops supplying power, causing that the external power supply 510 keeps on constantly disconnecting and connecting while charging. In some embodiments, if a difference between the limited maximum power and the maximum power is greater than a predetermined value, which means that a threshold for triggering the protection mechanism of the external power supply 510 is less than the rated power of the electronic device 520. In steps 522, if YES, the electronic device 520 continues to perform step 523. If NO, the electronic device 520 continues to perform step 521.

The electronic device 520 performs step 523 to adjust a load, until the slope of the DC voltage corresponds to a zero slope. In some embodiments, the processing circuit of the electronic device 520 adjusts the load, until the DC voltage is stable in a predetermined period. In some embodiments, the load can be progressively decreased and/or increased according to multiple predetermined values (e.g., three or more than three values) in order, in order to approach the actual maximum load which can be supported by the external power supply 510. For example, the electronic device 520 configures 100% of total load according to the rated power, when the supply voltage decreases, the electronic device 520 reduce the load by a first predetermined value (e.g. 35%). When the load is 65% of total load, if the supply voltage is stable (e.g., the slope of the supply voltage corresponds to a zero slope), the electronic device 520 can increase the load by a second predetermined value (e.g. 15%). When the load is 80% of total load, if the supply voltage decreases, the electronic device 520 can decrease the load by a third predetermined value (e.g. 8%). When the load is 72% of total load, if the supply voltage is stable, then 72% of total load can be considered as the adjusted load.

The electronic device 520 performs step 524 to estimate the limited maximum power delivered from the external power supply according to the adjusted load, to update output power information. In some embodiments, the actual current intensity provided by the external power supply 510 can be estimated according to the adjusted load (e.g. 72% of total load), thereby estimating the limited maximum power, provided by the external power supply 510, according to the DC voltage and the current, in order to update the output power information. When the actual output power of the external power supply 510, which is limited by the protection mechanism, is not meet the rated power of the electronic device 520, the electronic device 520 can estimate the actual output power of the external power supply 510 by adjusting the load, thereby updating the output power information of the external power supply 510. As a result, even in a situation that the actual output power of the external power supply 510 is less than the rated power of the electronic device 520, the electronic device 520 is capable of stable charging.

Summary, the sink device and the self-adaptation methods for the sink device and the electronic device are capable of stable charging in situations that there is a discrepancy between a power supplied by the power adapter and power data obtained by or a rated power of an electronic device.

## Claims

1. A self-adaption method for a sink device (120), **characterized by** comprising:
obtaining source capabilities of a source device (110);
requesting a maximum power from the source device (110) according to the source capabilities;
receiving a message indicating that the source device (110) accepts the request, and receiving a limited maximum power delivered by the source device (110);
when the source device (110) delivers the limited maximum power, detecting and tracking a slope of a direct current (DC) voltage;
when the source device (110) delivers the limited maximum power, and when the slope of the DC voltage changes, adjusting a load (127), until the slope of the DC voltage corresponds to a zero slope to yield an adjusted load; and
estimating the limited maximum power delivered by the source device (110) according to the adjusted load, to update the source capabilities to yield updated source capabilities.

2. The self-adaption method of claim 1, further comprising:
requesting the maximum power from the source device (110) according to the source capabilities, and configuring the load (127) according to the maximum power.

3. The self-adaption method of claim 1 or 2, further comprising:
estimating the limited maximum power according to the adjusted load and a value of the DC voltage.

4. The self-adaption method of claim 1, 2 or 3, wherein the limited maximum power corresponds to a threshold for triggering a protection mechanism of the source device (110), the protection mechanism is one of over load protection, over power protection or over current protection, a difference between the limited maximum power and the maximum power exceeds a predetermined value means that the threshold for triggering the protection mechanism of the source device (110) is less than the maximum power in the source capabilities of the source device (110).

5. The self-adaption method of claim 1, 2, 3 or 4, further comprising:
selecting a required voltage and current from the updated source capabilities according to requirements; and
requesting the source device (110) to deliver the required voltage and current.

6. The self-adaption method of claim 1, 2, 3 or 4, further comprising:
communicating with the source device (110) based on a power delivery protocol, to obtain the source capabilities of the source device (110).

7. A sink device (120), comprising:
a connector (121), configured to be coupled to a source device (110);
a voltage detection circuit (126), electrically connected to the connector (121); and
a control circuit (122), electrically connected to the connector (121) and the voltage detection circuit (126), wherein the control circuit (122) is configured to:
obtain source capabilities of the source device (110);
request a maximum power from the source device (110) according to the source capabilities;
receive a message indicating that the source device (110) accepts the request, and receive a limited maximum power delivered by the source device (110);
when the source device (110) delivers the limited maximum power, detect and track a slope of a direct current (DC) voltage;
when the source device (110) delivers the limited maximum power, and when the slope of the DC voltage changes, adjust a load (127), until the slope of the DC voltage corresponds to a zero slope to yield an adjusted load; and
estimate the limited maximum power delivered by the source device (110) according to the adjusted load, to update the source capabilities to yield updated source capabilities.

8. The sink device (120) of claim 7, wherein the control circuit (122) is further configured to request the maximum power from the source device (110) according to the source capabilities, and configure the load (127) according to the maximum power.

9. The sink device (120) of claim 7 or 8, wherein the control circuit (122) is further configured to estimate the limited maximum power according to the adjusted load and a value of the DC voltage.

10. The sink device (120) of claim 7, 8 or 9, wherein the limited maximum power corresponds to a threshold for triggering a protection mechanism of the source device (110), the protection mechanism is one of over load protection, over power protection or over current protection, wherein a difference between the limited maximum power and the maximum power exceeds a predetermined value means that the threshold for triggering the protection mechanism of the source device (110) is less than the maximum power in the source capabilities of the source device (110).

11. The sink device (120) of claim 7, 8, 9 or 10, wherein the control circuit (122) is further configured to:
select a required voltage and current from the updated source capabilities according to requirements; and
request the source device (110) to deliver the required voltage and current.

12. The sink device (120) of claim 7, 8, 9 or 10, wherein the source device (110) is a universal serial bus (USB) power delivery source device, the sink device (120) is a USB power delivery sink device, and the source device (110) and the sink device (120) support a power delivery protocol.

13. A self-adaption method for an electronic device (420), comprising:
receiving a limited maximum power delivered by an external power supply (410);
when the external power supply (410) delivers the limited maximum power, detecting and tracking a slope of a direct current (DC) voltage;
when the external power supply (410) delivers the limited maximum power, and when the slope of the DC voltage changes, adjusting a load (426), until the slope of the DC voltage corresponds to a zero slope to yield an adjusted load; and
estimating the limited maximum power delivered by the external power supply (410) according to the adjusted load, to update output power information.

14. The self-adaption method of claim 13, further comprising:
when the limited maximum power delivered by the external power supply (410) is received, configuring the load (426) according to a rated power of the electronic device (420).

15. The self-adaption method of claim 13, wherein the limited maximum power corresponds to a threshold for triggering a protection mechanism of the external power supply (410), the change in the slope of the DC voltage refers to the threshold for triggering the protection mechanism of the external power supply (410) being less than the rated power of the electronic device (420).
